# EUROPEAN PATENT SPECIFICATION

(11) **EP 2 648 362 B1**
(45) Date of publication and mention of the grant of the patent: **18.12.2019**
(21) Application number: 11844983.4
(22) Date of filing: 23.08.2011
(51) Int. Cl.: H04L 9/32, G06F 21/30, G06F 21/62, H04L 29/06, G06Q 20/12

(54) **AUTHORIZATION INFORMATION VERIFICATION DEVICE AND AUTHORIZATION INFORMATION VERIFICATION PROGRAM, AND AUTHORIZATION INFORMATION VERIFICATION SYSTEM AND AUTHORIZATION INFORMATION VERIFICATION METHOD**
VORRICHTUNG ZUR ÜBERPRÜFUNG VON AUTORISIERUNGSINFORMATIONEN, PROGRAMM ZUR ÜBERPRÜFUNG VON AUTORISIERUNGSINFORMATIONEN, SYSTEM ZUR ÜBERPRÜFUNG VON AUTORISIERUNGSINFORMATIONEN UND VERFAHREN ZUR ÜBERPRÜFUNG VON AUTORISIERUNGSINFORMATIONEN
DISPOSITIF DE VÉRIFICATION D'INFORMATIONS D'AUTORISATION ET PROGRAMME DE VÉRIFICATION D'INFORMATIONS D'AUTORISATION, ET SYSTÈME DE VÉRIFICATION D'INFORMATIONS D'AUTORISATION ET PROCÉDÉ DE VÉRIFICATION D'INFORMATIONS D'AUTORISATION

(30) Priority: 30.11.2010 JP 2010266937
(43) Date of publication of application: 09.10.2013
(73) Proprietor: NEC Corporation, Tokyo 108-8001 (JP)
(72) Inventor: HASHIZUME Hiroshi, Tokyo 108-8001 (JP)
(74) Representative: Betten & Resch
(86) International application number: PCT/JP2011/068914
(87) International publication number: WO 2012/073559

(56) References cited:
- EP-A1- 1 505 530
- WO-A2-2010/132228
- JP-A- 2003 348 077
- JP-A- 2006 209 634
- JP-A- 2009 282 561
- JP-A- 2010 128 719
- JP-A- 2010 165 306
- US-A1- 2006 265 337

## Description

### {Technical Field}

The present invention relates to an authentication business, and more specifically, to verification of various authorization information which is already authorized by a business operator.

### {Background Art}

In recent years, a vertical integrated model in which the same business operator handles an authorization business and a service business hinders the development of the service has been criticized by the media. Further, recently, horizontal division model in which different business operators handle the authorization business and the service business has been gradually developed.

An example of a technology regarding the horizontal division model is disclosed in Patent Literature 1. In the technology disclosed in Patent Literature 1, a server is provided as a device of a service provider that provides a service such as electronic commercial transaction with a user device which is accessed through a network. In this server, in order to safely provide a service, authentication for the user device is performed in advance before providing the service. In case of a vertical integrated model, this authentication is performed by performing the authentication process by various servers. However, the server disclosed in Patent Literature 1 which is a technology regarding the horizontal division model cooperates with the authentication device that unifiably handles the authentication process of the various servers in order to provide the service to the user device which is authenticated by the authentication device. Prior art is known from EP 1505530 A1 .

### {Citation List}

### {Patent Literature}

{PTL 1} JP-A-2007-257500

### {Non-Patent Literature}

{NPTL 1} openid-authentication-2_0, [online], [searched on October 26, 2010], Internet <URL:http://openid.net/specs/openid-authentication-2_0.html>

### {Summary of Invention}

### {Technical Problem}

As described above, it is possible to implement the horizontal division model using the technology disclosed in Patent Literature 1.

However, from the viewpoint of a user, generally, reliability of the authentication business operator that registers information (called credential information, authentication information, or qualification information) which is used to authenticate ID/password of the user is high but reliability of a service provider to be authorized which handles only the service business is not so high.

Therefore, several mechanisms or systems for increasing reliability of the service provider to be authorized or guaranteeing the reliability are considered.

Generally, if the service provider to be authorized receives various authorizations (for example, privacy mark) from a third party organization, the service provider to be authorized needs to officially announce through a homepage that the service provider to be authorized is authorized or independently build a verification method with respect to the authorization business operator to present the verification result to the user. The former may not establish credibility of the user due to unverified information (which may be presented by a malevolent business operator without permission). Further, even though the latter may establish credibility of the user, cost to build a verification system is required, which may impose a heavy burden on the service provider to be authorized. In addition, in order to avoid building the system, a structure that does not perform the verification is considered. However, if the verification is not performed, the credibility of the authorization may have doubts. Therefore, the authorization system of the service provider to be authorized is not efficiently utilized.

Therefore, the present invention has been made in an effort to provide an authorization information verification device, an authorization information verification program, an authorization information verification system, and an authorization information verification method which are capable of improving reliability with respect to a user without building an independent system for verification by a service provider to be authorized that provides a service. The invention is defined in indepdendent claims 1 and 4.

### {Solution to Problem}

A first aspect of the present invention provides a verification device which is accessed so as to communicate with both a device to be authorized that is an object receiving authorization and an authorization device that performs the authorization. The verification device includes a receiving unit that receives an authorization verification request from the device to be authorized that receives a service request from a user, an authorization information acquiring unit that acquires authorization information from the device to be authorized when the request is received, a verification request unit that transmits the acquired authorization information to the authorization device and requests verification regarding whether the transmitted authorization information is authorization information that has been authorized by an authorization device of a transmission destination, and a transmitting unit that receives the verification result from the authorization device and presents the received verification result to the user.

A second aspect of the present invention provides a verification device which is accessed so as to communicate with a user terminal that is an object receiving authorization, a device to be authorized that provides a service, and an authorization device that performs the authorization. The verification device includes a receiving unit that receives an authorization verification request from the device to be authorized that has received an authorization verification request from a user, an authorization information acquiring unit that acquires authorization information from the device to be authorized when the request is received, a verification request unit that transmits the acquired authorization information to the authorization device and requests verification regarding whether the transmitted authorization information is authorization information that has been authorized by an authorization device of a transmission destination, and a transmitting unit that receives the verification result from the authorization device and presents the received verification result to a service provider to be authorized.

A third aspect of the present invention provides a verification program which is embedded in a verification device which is accessed so as to communicate with both a device to be authorized that is an object receiving authorization and an authorization device that performs the authorization. The program causes a computer to serve as a verification device including a receiving unit that receives an authorization verification request from the device to be authorized that receives a service request from a user, an authorization information acquiring unit that acquires authorization information from the device to be authorized when the request is received, a verification request unit that transmits the acquired authorization information to the authorization device and requests verification regarding whether the transmitted authorization information is authorization information that has been authorized by the authorization device of a transmission destination, and a transmitting unit that receives the verification result from the authorization device and presents the received verification result to the user.

A fourth aspect of the present invention provides a verification program which is embedded in a verification device which is accessed so as to communicate with a user terminal that is an object receiving authorization, a device to be authorized that provides a service, and an authorization device that performs the authorization. The verification program causes a computer to serve as a verification device including a receiving unit that receives an authorization verification request from the device to be authorized that has received the authorization verification request from a user, an authorization information acquiring unit that acquires authorization information from the device to be authorized when the request is received, a verification request unit that transmits the acquired authorization information to the authorization device and requests verification regarding whether the transmitted authorization information is authorization information that has been authorized by an authorization device of a transmission destination, and a transmitting unit that receives the verification result from the authorization device and presents the received verification result to a service provider to be authorized.

A fifth aspect of the present invention provides a verification system including a device to be authorized that is an object receiving authorization, an authorization device that performs the authorization, and a verification device which is accessed so as to communicate with both the device to be authorized and the authorization device. The verification system includes a transmitting unit that transmits an authorization verification request to the verification device when the device to be authorized receives a service request from a user, an authorization information acquiring unit that acquires authorization information from the device to be authorized when the verification device receives the request, a verification request unit that allows the verification device to transmit the acquired authorization information to the authorization device and request verification regarding whether the transmitted authorization information is authorization information that has been authorized by the authorization device of a transmission destination, a controller that allows the authorization device to perform verification in accordance with the request from the verification device and transmit the verification result to the verification device, and a transmitting unit that allows the verification device to receive the verification result from the authorization device and present the received verification result to the user.

A sixth aspect of the present invention provides a verification method which is performed by a system including a device to be authorized that is an object receiving authorization, an authorization device that performs the authorization, and a verification device which is accessed so as to communicate with both the device to be authorized and the authorization device. The verification method includes:
transmitting an authorization verification request to the verification device when the device to be authorized receives a service request from a user, acquiring authorization information from the device to be authorized when the verification device receives the request, allowing the verification device to transmit the acquired authorization information to the authorization device, requesting verification regarding whether the transmitted authorization information is authorization information that has been authorized by the authorization device of a transmission destination, allowing the authorization device to perform verification in accordance with the request from the verification device, and transmitting the verification result to the verification device, and allowing the verification device to receive the verification result from the authorization device and present the received verification result to the user.

### {Advantagous Effects of the Invention}

According to the present invention, a verification agency is newly nominated so that the verification is performed by a device used by the verification agency rather than a service provider to be authorized that provides a service. Therefore, it is possible to improve reliability with respect to the user without building an independent system for verification by the service provider to be authorized that provides a service.

### {Brief Description of Drawings}

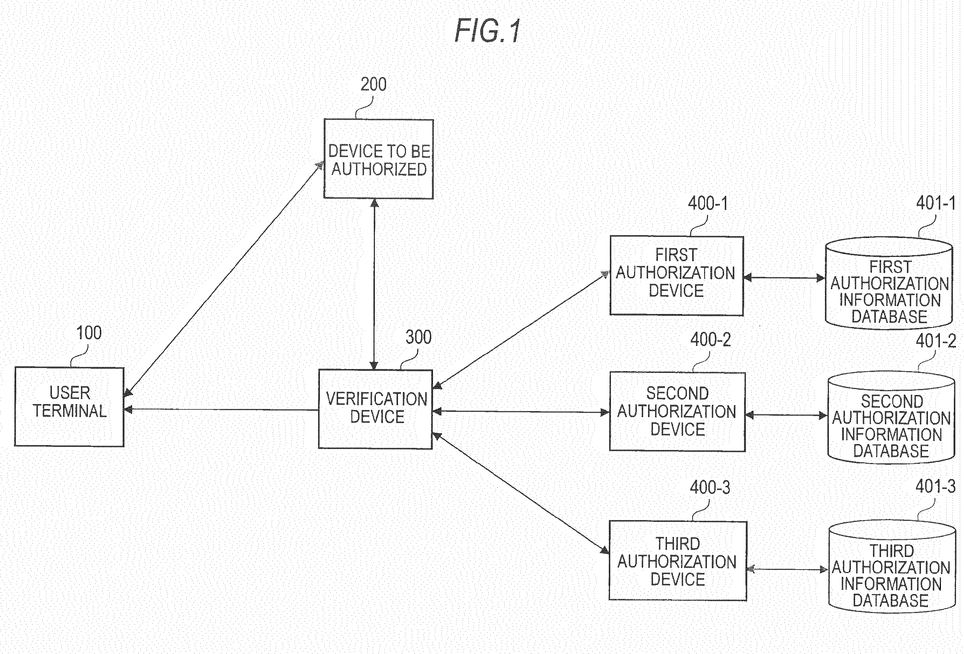

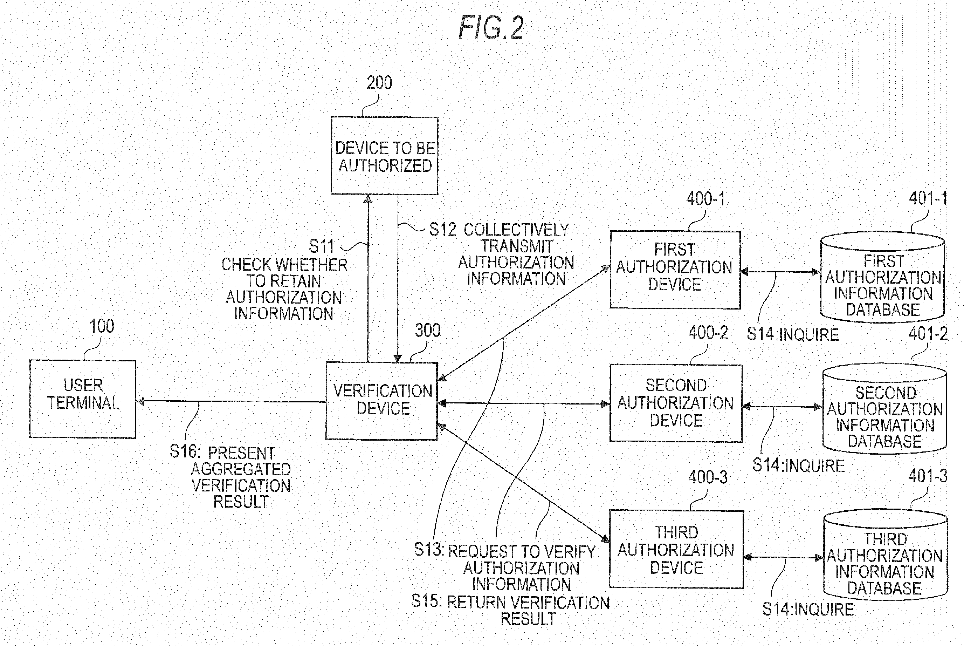

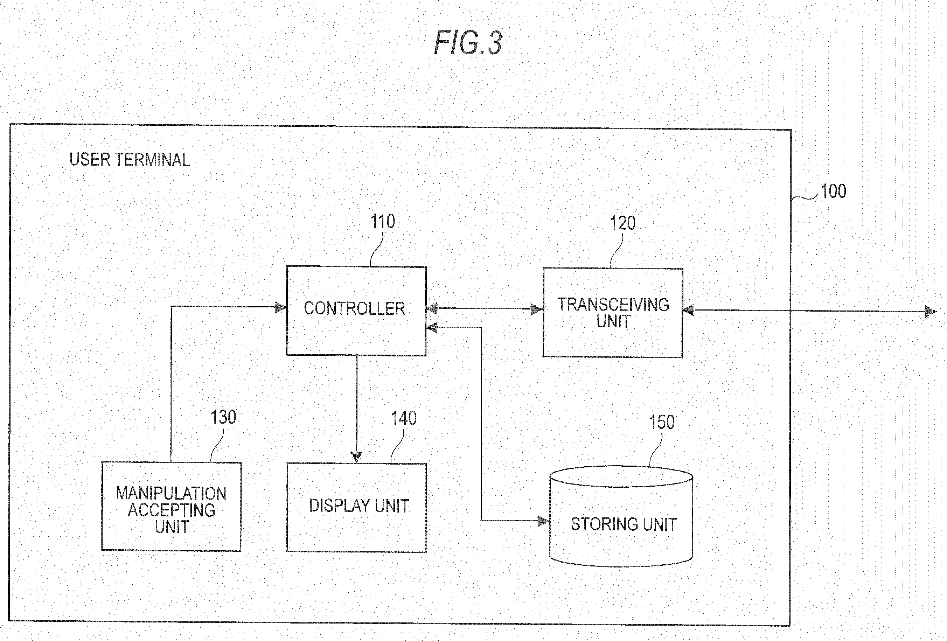

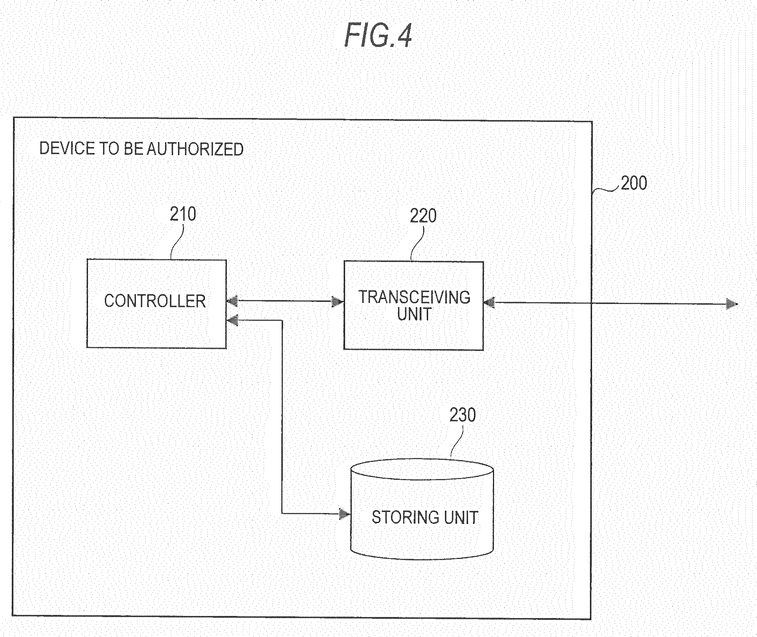

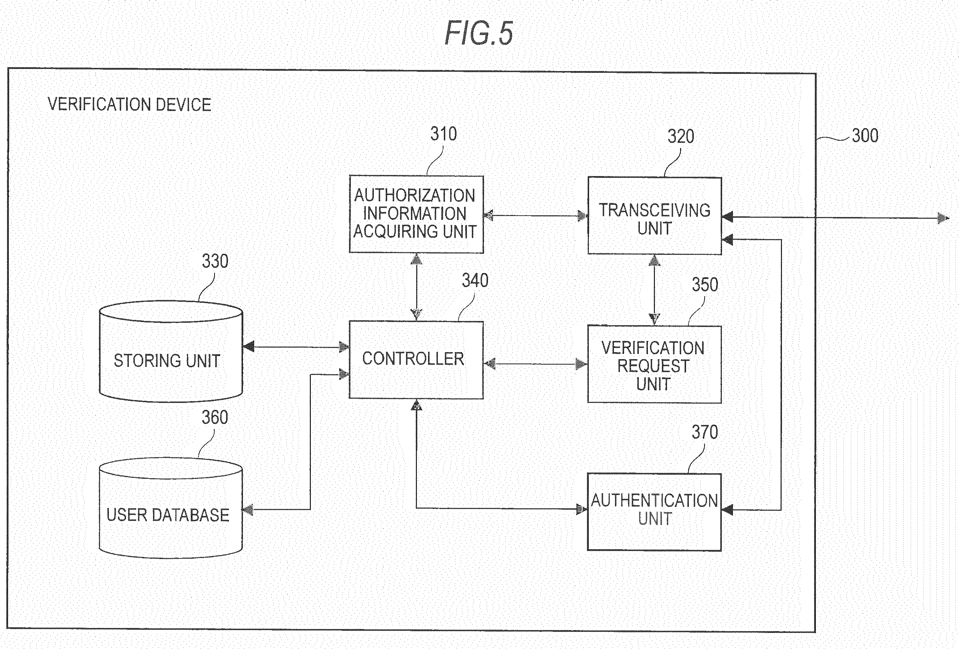

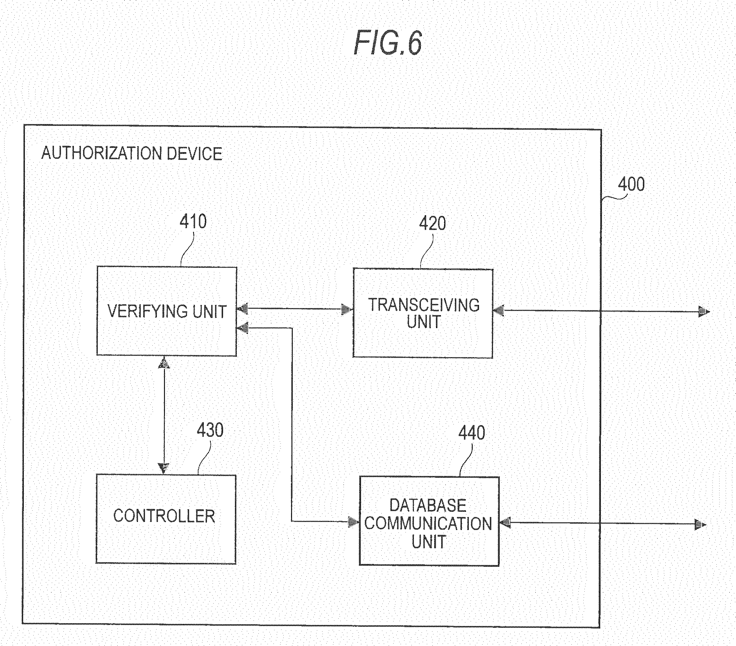

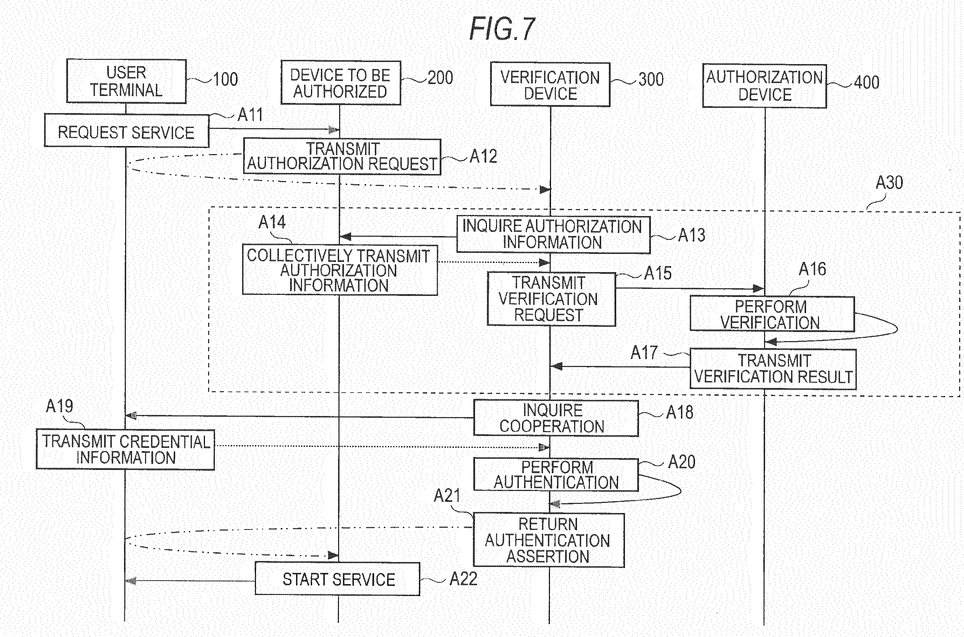

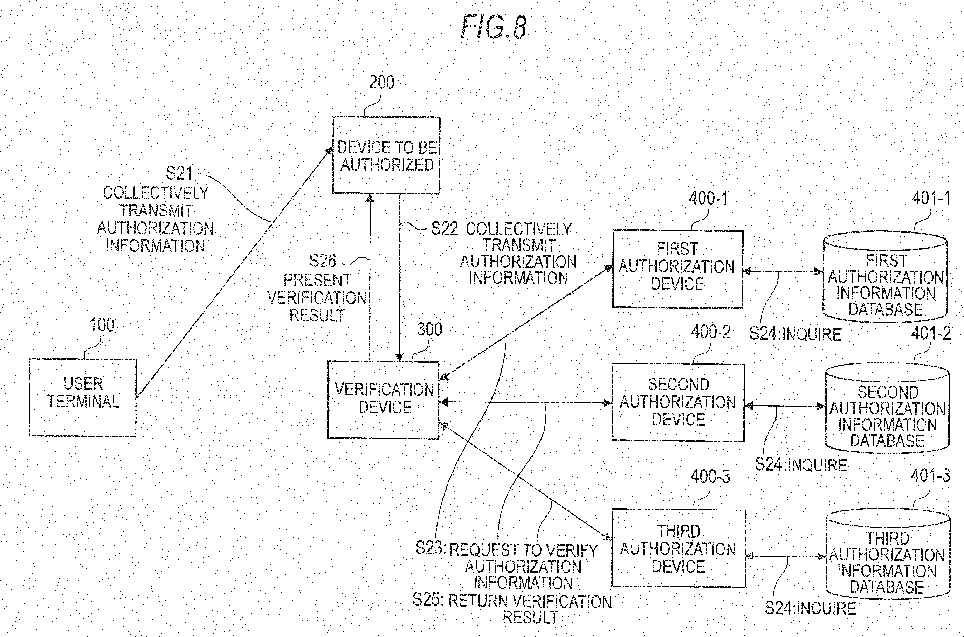

{Fig. 1} A Figure illustrates a basic configuration of an embodiment of the present invention.
{Fig. 2} A figure illustrates data transmission/reception when authorization information is verified when the service provider to be authorized and a verification agency are cooperated with each other according to an embodiment of the present invention.
{Fig. 3} A figure illustrates a basic configuration of a user terminal according to an embodiment of the present invention.
{Fig. 4} A figure illustrates a basic configuration of a device to be authorized according to an embodiment of the present invention.
{Fig. 5} A figure illustrates a basic configuration of a verification device according to an embodiment of the present invention.
{Fig. 6} A figure illustrates a basic configuration of an authorization device according to an embodiment of the present invention.
{Fig. 7} A figure is a sequence diagram illustrating a basic operation according to an embodiment of the present invention.
{Fig. 8} A figure illustrates data transmission/reception when authorization information is verified when the service provider to be authorized and a verification agency are cooperated with each other according to a modification embodiment of an embodiment of the present invention.

### {Reference Signs List}

- 100: User terminal
- 110: Controller
- 120: Transceiving unit
- 130: Manipulation accepting unit
- 140: Display unit
- 150: Storing unit
- 200: Device to be authorized
- 210: Controller
- 220: Transceiving unit
- 230: Storing unit
- 300: Verification device
- 310: Authorization information acquiring unit
- 320: Transceiving unit
- 330: Storing unit
- 340: Controller
- 350: Verification request unit
- 360: User database
- 370: Authorizing unit
- 400: Authorization device
- 400-1: First authorization device
- 400-2: Second authorization device
- 400-3: Third authorization device
- 401-1: First user database
- 400-2: Second user database
- 400-3: Third user database
- 410: Verifying unit
- 420: Transceiving unit
- 430: Controller
- 440: Database communication unit

### {Description of Embodiments}

Next, a system including a relay and aggregation device of authorization information of a business operator according to an embodiment of the present invention will be described in detail with reference to the drawings.

Referring to Fig. 1, the embodiment includes a user terminal 100, a device to be authorized 200, a verification device 300, a plurality of authorization devices 400, and plurality of authorization information databases 401. As the plurality of authorization devices 400, a first authorization device 400-1, a second authorization device 400-2, and a third authorization device 400-3 are illustrated. Further, as the plurality of authorization information databases, a first authorization information database 401-1, a second authorization information database 401-2, and a third authorization information database 401-3 are illustrated. In addition, the configuration illustrated in Fig. 1 is illustrative only for the description of the embodiment but does not limit the number of the authorization devices. Further, the user terminal 100 and other devices are connected through a network, but the connection method may be an arbitrary method. As a specific example, a public network such as Internet may be considered to be used but a part or all of the devices may be connected through an exclusive line. In addition, an arbitrary encryption technology may be used in view of security.

The user terminal 100 may be implemented by information communication equipment such as a PC or cellular phone which is possessed by a user. Further, the device to be authorized 200, the verification device 300, the plurality of authorization devices 400, and the plurality of authorization information databases 401 may be implemented by a server prepared by each of the business operators. In addition, the devices may be implemented by one server but the devices may be implemented by cooperation of a plurality of servers.

In the description of detailed configurations of the user terminal 100 and the devices, first, a user that uses the user terminal 100 and the devices will be described.

This embodiment uses a method in which a verification agency relays and aggregates various authorization information which is already authorized by a business operator and collectively presents the information to the user.

Specifically, a horizontal division model in which a service provider to be authorized (service provider) and a verification agency (authorization business operator) are divided is assumed. Therefore, users of the embodiment include the following four parties.

A first user is a "user". The user enjoys a service and uses the user terminal 100. The user requests the service provider to be authorized to provide a service and enjoys the service through the authentication by the verification agency. Credential information of the user, such as user ID/password is registered and stored by the verification agency. However, the credential information is not notified to the service provider to be authorized.

A second user is a "service provider to be authorized". The service provider to be authorized is a service provider that provides a service and uses the device to be authorized 200. The service provider to be authorized receives the service request from the user and requests the authentication to the verification agency. When the service provider to be authorized requests the authentication, the service provider to be authorized collectively transmits authorization information together with the authentication request to receive the verification. In the case of the service provider to be authorized, it is required that the service provider to be authorized is authorized in advance and the fact is registered, separately from the authentication of the user.

In the embodiment, "authentication" indicates that the validity of the user is confirmed based on the credential information such as the user ID/password of the user. In the present embodiment, the authentication is performed by the verification device 300.

Further, in the embodiment, the "authorization" indicates that the service provider to be authorized is authorized as a business partner by the authorization business operator and the fact is registered. In addition, "verification of the authorization" indicates that the validity of the authorization is confirmed. In the embodiment, the authorization and the verification of the authorization are performed by the first authorization device 400-1, the second authorization device 400-2, and the third authorization device 400-3. Further, at the time of authorization, information (for example, ID and onetime password) certifying that the service provider to be authorized is authorized is given to the service provider to be authorized by the authorization business operator. In addition, in the embodiment, the "authorization information" is information including at least information indicating "authorized" and information for certification of the authorization.

A third user is a "verification agency". The verification agency is an authentication business operator that manages the credential information of the user and uses the verification device 300 which is a specific device in the embodiment. The verification agency may be a business operator which is trusted by the user in many cases. The verification agency may relay the verification request of the authorization information from the service provider to be authorized, receive the verification response from the authorization business operator, and collect the verification results from the plurality of business operators to collectively present the verification result to the user.

A fourth user is an "authorization business operator". The authorization business operators are provided with individual authorization equipment. In the embodiment, a specific example of the authorization equipment is the authorization device 400. The authorization business operatory which is assumed in the embodiment is an authorization business operator that is capable of verifying the authorization state on the network. For example, the embodiment includes a system that performs the verification by transmitting an authorization certification number and a one-time password to an authorization business operator when an authorization state of any business operator is checked. In the embodiment, the authorization device 400 does not perform a specific operation, but handles an operation that inquires information in authorization information database 401 after receiving the authorization information verification from the verification agency and returns the verification result to the verification agency.

Next, referring to Fig. 2, relay and aggregation of verification of authorization information which is a characteristic of the embodiment will be described. In this description, it is considered that the service provider to be authorized is authorized by the first, second, and third authorization business operators. Further, it is also considered that the verification agency and the authentication business operator that issues, manages, and authenticates a user ID are same and the service provider to be authorized and a service provider that provides a service to the user are same.
1. The verification device 300 that issues, manages, and authenticates the ID of the user checks whether the device to be authorized 200 retains the authorization information (S11 of Fig. 2).
2. The device to be authorized 200 returns the retained authorization information to the verification device 300 in accordance with a predetermined format. When the device to be authorized 200 is authorized by the plurality of authorization devices 400, a plurality of authorization information is collectively transmitted to the verification device 300 (S12 of Fig. 2).
3. The verification device 300 that receives the authorization information requests the authorization devices 400 corresponding to the authorization information to verify the authorization information (S13 of Fig. 2).
4. The authorization device 400 checks the received authorization information and performs the verification of the authorization by inquiring the authorization information database 401 regarding whether the service provider to be authorized is the service provider authorized by the authorization device 400 itself (S14 of Fig. 2).
5. The authorization device 400 returns the verification results which are inquired in the authorization information database 401 to the verification device 300 (S15 of Fig. 2).
6. The verification device 300 aggregates the verification results from the respective authorization business operators to collectively present the verification results to the user (S16 of Fig. 2). Further, if the authorization information which is transmitted from the device to be authorized 200 is insufficient, error contents which are prepared by the authorization device 400 are returned to the device to be authorized 200.

Next, referring to Figs. 3 to 6, the configurations of the user terminal 100 and the respective devices will be described in detail.

Referring to Fig. 3, the user terminal 100 includes a controller 110, a transceiving unit 120, a manipulation accepting unit 130, a display unit 140, and a storing unit 150.

The controller 110 is a part that controls the entire user terminal 100. The controller 110 generally is implemented by a central processing unit (CPU) and a storage device which may access to stored data in a predetermined order such as a cache memory and a random access memory (RAM) which is included in the CPU.

The transceiving unit 120 is a part having a function to communicate with other devices through a network.

The manipulation accepting unit 130 is a part that is manipulated by the user. Further, the display unit 140 is a part that presents the information to the user. In addition, the manipulation accepting unit 130 and the display unit 140 may be mounted as a touch panel.

The storing unit 150 is a storage device and stores a program which allows the controller 110 to control the entire user terminal 100 or credential information such as a user ID/password.

Referring to Fig. 4, the device to be authorized 200 includes a controller 210, a transceiving unit 220, and a storing unit 230.

The controller 210 is a part which controls the entire device to be authorized 200. The controller 210 is implemented by the central processing unit, which is similar to the controller 110.

The transceiving unit 220 is a part having a function to communicate with the user terminal 100 or other devices through a network.

The storing unit 230 is a storage device and stores a program which allows the controller 210 to control the entire device to be authorized 200, a confirmation code such as one-time password, or information such as data which provides a service to the user as authorization information.

Referring to Fig. 5, the verification device 300 includes an authorization information acquiring unit 310, a transceiving unit 320, a storing unit 330, a controller 340, a verification request unit 350, a user database 360, and an authentication unit 370.

The authorization information acquiring unit 310 inquires the transceiving unit 320 which authorization information is retained in the device to be authorized 200. The authorization information is acquired by receiving the response with respect to the inquiry of the authorization information acquiring unit 310. However, with respect to the device to be authorized 200 that sends a large quantity of requests to verify the authorization at plural times or one time, the authorization information acquiring unit 310 performs packet filtering so as not to impose a load on the authorization device 400. The packet filtering may be performed based on a predetermined standard. As a specific example, a "white list method" that allows the request only by a device to be authorized 200 which is registered in a list, a "blacklist method" that rejects the request by a device to be authorized 200 which is registered in a list, and an "abnormality detecting method" that uses statistic information may be used. Further, by using the filtering structure, various attacks on the authorization device 400 may be blocked.

The transceiving unit 320 is a part having a function to communicate with other devices through a network.

The storing unit 330 is a storage device and stores a program which allows the controller 340 to control the entire verification device 300.

The controller 340 is a part that controls the entire verification device 300. The controller 210 is implemented by the central processing unit, which is similar to the controller 110.

The verification request unit 350 transmits a verification request to the authorization device 400 which corresponds to the authorization information in order to verify the authorization information. Further, the verification request unit 350 receives the verification result from the authorization device 400.

The user database 360 is a storage device that stores user information and stores credential information such as the user ID/password. Further, even though the storing unit 330 is illustrated separately from the user database 360 in Fig. 4, both the storing unit 330 and the user database 360 may be implemented in one storage device.

The authentication unit 370 is a part that performs the authentication by comparing the credential information of the user which is received from the user terminal 100 with the credential information which is stored in the user database retained in the authentication unit 370.

Referring to Fig. 6, the authorization device 400 includes a verifying unit 410, a transceiving unit 420, a controller 430, and a database communication unit 440. Further, the first authorization device 400-1, the second authorization device 400-2, and the third authorization device 400-3 illustrated in Fig. 1 are considered to have the same configuration as the authorization device 400 illustrated in Fig. 5.

The verifying unit 410 is a part that performs the verification by comparing the authorization information received from the verification request unit 350 with the authorization information stored in the user database 401 which is accessed by the verifying unit 410. Further, the verifying unit 410 is a part that transmits the verification result to the verification device 300 through the transceiving unit 420.

The transceiving unit 420 is a part having a function to communicate with other devices through a network.

The controller 430 is a part that controls the entire authorization device 400. The controller 210 is implemented by the central processing unit, which is similar to the controller 110.

The database communication unit 440 is a part that communicates with the user database 401 which is accessed by the database communication unit 440.

Further, in the above-mentioned devices, the controller reads out software stored in the storing unit and uses a memory in the controller to perform operation processing. In other words, the embodiment is implemented by the cooperation of a CPU or a memory, hardware such as various interfaces, and a program (software).

Next, referring to the sequence diagram of Fig. 7, a flow when the authorization information whose verification is completed is presented when a user is logged-in will be described. A part out of a frame of A30 of Fig. 7 will be described based on an ID collaboration technology "Open ID Authentication 2.0" which is used worldwide. Further, a specification of "Open ID Authentication 2.0" is set by "Open ID foundation" which is a group that distributes the Open ID (see Non-Patent Literature 1).

First, the user terminal 100 that receives a service request instruction of the user from the manipulation accepting unit 130 requests the service to the device to be authorized 200 (step All). In order to check the authentication state of the user, the device to be authorized 200 transmits the authentication request to the verification device 300 redirectly (step A12).

The authorization information acquiring unit 310 of the verification device 300 which receives the request inquires which authorization information is retained in the device to be authorized 200 (step A13).

The device to be authorized 200 collectively transmits the authorization information which is retained by the device to be authorized 200 to the verification device 300 (step A14).

The verification request unit 350 of the verification device 300 transmits a verification request to the authorization device 400 which corresponds to the authorization information in order to verify the authorization information (step A15).

The verifying unit 410 of the authorization device 400 performs the verification by comparing the authorization information received from the verification request unit 350 with the authorization information stored in the user database 401 which is accessed by the verifying unit 410 (step A16). The authorization device 400 returns the verification result to the verification device 300 (step A17).

The flow from steps A13 to A17 is implemented in the embodiment but has not been considered in cooperation between the business operators in the related art (step A30).

Continuously, the verification device 300 inquires the user whether to cooperate with the service provider to be authorized while presenting the verification result of the authorization information to the user through the user terminal 100 (step A18). The user checks the verification result of the authorization information by the display unit 140 of the user terminal 100. If the cooperation is allowed, the user transmits credential information such as the user ID/password to the verification device 300 and logs in (step A19). The authentication unit 370 of the verification device 300 authenticates the received credential information of the user based on the user database 360 which is retained by the authentication unit 370 (step A20). When the authentication normally proceeds, the verification device 300 returns the authentication assertion to the device to be authorized 200 redirectly (step A21). The device to be authorized 200 starts the service while presenting to the user that the authentication is completed (step A22).

In the above-described embodiment, a verification agency is newly nominated and a device used by the verification agency is prepared. Therefore, the authorization information which is asserted by the service provider to be authorized may be verified by proxy through the verification agency. Therefore, in the horizontal division model in which the authentication business and the service business are handled by different business operators, there is no need to notify of the credential information of the user the business operator that operates the service business.

Further, in the above-described embodiment, a verification agency is newly nominated and a device used by the verification agency is prepared so that a simple structure in which a significant system updating responsibility is not imposed on the service provider to be authorized may be implemented.

Further, in the above-described embodiment, a verification agency is newly nominated and the user authentication is performed between the device which is used by the verification agency and the user terminal so that there is no need to notify the service provider to be authorized of the credential information.

In addition, in the above-described embodiment, the device which is used by the verification agency requests the verification of the authorization information to the plurality of authorization devices so that it is possible to collectively present aggregated information of a plurality of authorization information to the user.

Further, according to the embodiment, specifically, in the horizontal division model in which the ID issuance/authentication business operator and the service provider are divided, the ID issuance/authentication business operator also plays a role as the verification agency, which becomes a resolving method suitable for an actual business. Specifically, when the authentication business operator and the service provider (service provider to be authorized) perform the ID authentication cooperation, the authorization information which is asserted by the service provider is verified by proxy through the authentication business operator and a plurality of authorization information whose verification is completed is aggregated to be presented to the user. For example, it is considered that there is a service provider to be authorized which is a photograph sharing site and this site performs authentication cooperation with a verification agency A. In this case, the user may acquire authorization information which becomes a basis determining whether to upload user's own photographs from the verification agency A and judge whether the verification agency A is a reliable service provider to be authorized.

Further, in the above-described embodiment, a model in which the service provider to be authorized requests to verify the authorization information through the verification agency to provide information to the user is provided. The same structure may be used in a modification of the embodiment where the authorization information (for example, license acquisition information) which is suggested by the user is requested to be verified through the verification agency and provides the information to the service provider to be authorized. Further, in the modification embodiment, "authorization" indicates that a user receives the authorization of a validity of some information by the authorization business operator and the fact is registered.

The relay and aggregation of verification of authorization information in the modification embodiment will be described. In this description, it is considered that the service provider to be authorized is authorized by the first, second, and third authorization business operators. Further, it is also considered that the verification agency and the authentication business operator that issues, manages, and authenticates a user ID are same and the service provider to be authorized and a service provider that provides a service to the user are same.
1. The user terminal 100 transmits authorization information which is retained in accordance with a predetermined format to the device to be authorized 200 in order to request the verification of the authorization information input by the user. If a plurality of authorizations is received, the user terminal 100 collectively transmits the plurality of authorization information (S21 of Fig. 8).
2. The device to be authorized 200 transmits the transmitted authorization information to the verification device 300. If the user transmits the plurality of authorization information, the device to be authorized 200 collectively transmits the plurality of authorization information to the verification device 300 (S22 of Fig. 8).
3. The verification device 300 that receives the authorization information requests the authorization devices 400 corresponding to the authorization information to verify the authorization information (S23 of Fig. 8).
4. The authorization device 400 checks the received authorization information and performs the verification of the authorization by inquiring the authorization information database 401 concerning whether the user is a user which is authorized by the authorization device 400 (S24 of Fig. 8).
5. The authorization device 400 returns the verification result which is inquired in the authorization information database 401 to the verification device 300 (S25 of Fig. 8).
6. The verification device 300 aggregates the verification results from the respective authorization business operators to collectively present the verification results to the device to be authorized 200 (S26 of Fig. 8).

By performing the operation as described above, the modification embodiment may request authorization information verification (for example, license acquisition information) which is suggested by the user through the verification agency and provide the information to the service provider to be authorized.

As a specific application method of the modification embodiment, the following cases may be considered.

Even in a vertical integrated model where the service provider to be authorized and the authorization business operator are same, the user verifies the authorization information such as license acquisition.

For example, in a case of application of complex national exam, if a plurality of pre-conditional qualifications for taking the national exam are required, the user inputs the authorization information so that the verification agency performs the verification and presents the verification result to the service provider to be authorized. By doing this, the service provider to be authorized may inquire whether the user satisfies all of the pre-conditional qualifications.

Further, a system that includes a relay and aggregation device of the business operator authorization information which is the embodiment of the present invention may be implemented not only by hardware but also by reading a program which allows the computer to function as any one of devices in the system including the relay and aggregation device of the business operator authorization information from a computer readable recording medium by a computer to be executed.

Specifically, in the above embodiment, it is described that the program is stored in the storage device in advance. However, a program that is operated as all or a part of any one of devices in the system including the relay and aggregation device of the business operator authorization information or executes the above processing may be stored in a computer readable recording medium such as a flexible disc, a CD-ROM (compact disc read only memory), a DVD (digital versatile disc), a MO (magneto optical disk (disc)), a BD (Blu-ray disc) to be distributed or installed in another computer to be operated as the above units or execute the above processes.

Further, the program may be stored in a disc device included in a server device on the Internet, and for example, the program may overlap a carrier wave to be downloaded in a computer to be executed.

In addition, the relay and aggregation method of the business operator authorization information according to the embodiment of the present invention may be implemented by a hardware or also implemented by allowing a computer to read the program that allows a computer to execute the method from a computer readable recording medium and to execute the program.

Further, the above-described embodiment is a preferred embodiment of the present invention. However, the scope of the present invention is not limited to the above embodiments, but various modifications may be performed without departing from the gist of the present invention.

This application is based on Japanese Patent Application No. 2010-266937 (filed on November 30, 2010) and claims priority to and the benefit of Japanese Patent Application No. 2010-266937 under the Paris convention.

Although a representative embodiment of the present invention has been described in detail, it is understood that various changes, substitutions, and alternatives may be made without departing from the spirit and scope of the invention as defined in the appended claims. Further, even though the claim is amended during the application procedure, the inventor intends to maintain the equivalent range of the claimed invention.

Some or all of the above-described embodiments may be described as following appendices, however, the present invention is not limited thereto.
(Appendix 1) A verification device which is accessed so as to communicate with both a device to be authorized that is an object receiving authorization and an authorization device that performs the authorization, the device including:
   a receiving unit that receives an authorization verification request from the device to be authorized that receives a service request from a user;
   an authorization information acquiring unit that acquires authorization information from the device to be authorized when the request is received;
   a verification request unit that transmits the acquired authorization information to the authorization device and requests verification regarding whether the transmitted authorization information is authorization information that has been authorized by an authorization device of a transmission destination, and
   a transmitting unit that receives the verification result from the authorization device and presents the received verification result to the user.
(Appendix 2) The verification device of the appendix 1, further including:
   a user database that stores information used to authenticate the user; and
   an authentication unit that, when expression that allows the cooperation with the device to be authorized and information used to authenticate the user are received from the user who checks the verification result, authenticates the user by comparing the received information and the information stored in the user database;
   wherein when the authentication normally proceeds, the expression indicating that the authentication normally proceeds is transmitted to the device to be authorized.
(Appendix 3) The verification device according to the appendix 1 or 2,
   wherein the service request from the user does not include information used to authenticate the user.
(Appendix 4) A verification device which is accessed so as to communicate with a user terminal that is an object receiving authorization, a device to be authorized that provides a service, and an authorization device that performs the authorization, the device including:
   a receiving unit that receives a request to verity the authorization from the device to be authorized that has received an authorization verification request from a user;
   an authorization information acquiring unit that acquires authorization information from the device to be authorized when the request is received;
   a verification request unit that transmits the acquired authorization information to the authorization device and requests verification regarding whether the transmitted authorization information is authorization information that has been authorized by an authorization device of a transmission destination; and
   a transmitting unit that receives the verification result from the authorization device and presents the received verification result to a service provider to be authorized.
(Appendix 5) The verification device according to any one of the appendixes 1 to 4, which is connected with a plurality of authorization devices, wherein the verification request unit selects an authorization device corresponding to the acquired authorization information among the plurality of authorization devices and requests the verification to the selected authorization device.
(Appendix 6) The verification device according to any one of the appendixes 1 to 5, wherein filtering is performed on the authorization verification request from the device to be authorized and the processing is continuously performed only for the authorization verification request according to a predetermined standard.
(Appendix 7) A verification program which is embedded in a verification device which is accessed so as to communicate with both a device to be authorized that is an object receiving authorization and an authorization device that performs the authorization, the program causing a computer to serve as a verification device including:
   a receiving unit that receives an authorization verification request from the device to be authorized that receives a service request from a user;
   an authorization information acquiring unit that acquires authorization information from the device to be authorized when the request is received;
   a verification request unit that transmits the acquired authorization information to the authorization device and requests verification regarding whether the transmitted authorization information is authorization information that has been authorized by an authorization device of a transmission destination; and
   a transmitting unit that receives the verification result from the authorization device and presents the received verification result to the user.
(Appendix 8) The verification program according to the appendix 7,
   wherein the program causes the computer to serve as a verification device, which further includes:
   a user database that stores information used to authenticate the user; and
   an authentication unit that, when expression that allows the cooperation with the device to be authorized and information used to authenticate the user are received from the user who checks the verification result, authenticates the user by comparing the received information and the information stored in the user database; and
   wherein when the authentication normally proceeds, the expression indicating that the authentication normally proceeds is transmitted to the device to be authorized.
(Appendix 9) The verification program according to the appendix 7 or 8,
   wherein the program causes the computer to serve as a verification device in which the service request from the user does not include information used to authenticate the user.
(Appendix 10) A verification program which is embedded in a verification device which is accessed so as to communicate with a user terminal that is an object receiving authorization, a device to be authorized that provides a service, and an authorization device that performs the authorization, the program causing a computer to serve as a verification device which includes:
   a receiving unit that receives an authorization verification request from the device to be authorized that has received the authorization verification request from a user;
   an authorization information acquiring unit that acquires authorization information from the device to be authorized when the request is received,
   a verification request unit that transmits the acquired authorization information to the authorization device and requests verification regarding whether the transmitted authorization information is authorization information that has been authorized by an authorization device of a transmission destination, and
   a transmitting unit that receives the verification result from the authorization device and presents the received verification result to the service provider to be authorized.
(Appendix 11) The verification program according to any one of the appendixes 7 to 10,
   wherein the program causes the computer to serve as a verification device which is connected with the plurality of authorization devices, and
   the verification request unit selects an authorization device corresponding to the acquired authorization information among the plurality of authorization devices and requests the verification to the selected authorization device.
(Appendix 12) The verification program according to any one of the appendixes 7 to 11,
   wherein the program causes the computer to serve as a verification device that performs filtering on the authorization verification request from the device to be authorized to continuously perform the processing only for the authorization verification request according to a predetermined standard.
(Appendix 13) A verification system including a device to be authorized that is an object receiving authorization, an authorization device that performs the authorization, and a verification device which is accessed so as to communicate with both the device to be authorized and the authorization device, wherein:
   the device to be authorized comprises a transmitting unit that transmits an authorization verification request to the verification device when the device to be authorized receives a service request from a user;
   the verification device comprises an authorization information acquiring unit that acquires authorization information from the device to be authorized when the verification device receives the request;
   the verification device comprises a verification request unit that transmits the acquired authorization information to the authorization device and requests verification regarding whether the transmitted authorization information is authorization information that has been authorized by the authorization device of a transmission destination;
   the authorization device comprises a controller that allows the authorization device to perform verification in accordance with the request from the verification device and transmit the verification result to the verification device; and
   the verification device comprises a transmitting unit that receives the verification result from the authorization device and presents the received verification result to the user.
(Appendix 14) The verification system according to the appendix 13,
   wherein the verification device further includes:
   a user database that stores information used to authenticate the user; and
   an authentication unit that, when expression that allows the cooperation with the device to be authorized and information used to authenticate the user are received from the user who checks the verification result, authenticates the user by comparing the received information and the information stored in the user database, and
   when the authentication normally proceeds, the expression indicating that the authentication normally proceeds is transmitted to the device to be authorized.
(Appendix 15) The verification system according to the appendix 13 or 14,
   wherein the service request from the user does not include information used to authenticate the user.
(Appendix 16) A verification system which includes a verification device which is accessed so as to communicate with a user terminal that is an object receiving authorization, a device to be authorized that provides a service, and an authorization device that performs the authorization, the verification system including:
   a transmitting unit that transmits an authorization verification request to the verification device when the device to be authorized receives a service request from a user;
   a receiving unit that allows the verification device to receive the authorization verification request from the device to be authorized that has received the authorization verification request from a user;
   an authorization information acquiring unit that acquires authorization information from the device to be authorized when the verification device receives the request, a verification request unit that allows the verification device to transmit the acquired authorization information to the authorization device and request verification regarding whether the transmitted authorization information is authorization information that has been authorized by an authorization device of a transmission destination, a controller that allows the authorization device to perform verification in accordance with the request from the verification device and transmit the verification result to the verification device; and
   a transmitting unit that allows the verification device to receive the verification result from the authorization device and present the received verification result to a service provider to be authorized.
(Appendix 17) The verification system according to any one of the appendixes 7 to 16, which is connected with a plurality of authorization devices, wherein the verification request unit selects an authorization device corresponding to the acquired authorization information among the plurality of authorization devices and requests the verification to the selected authorization device.
(Appendix 18) The verification system according to any one of the appendixes 7 to 17, wherein filtering is performed on the authorization verification request from the device to be authorized and the processing is continuously performed only for the authorization verification request according to a predetermined standard.
(Appendix 19) A verification method which is performed by a system including a device to be authorized that is an object receiving authorization, an authorization device that performs the authorization, and a verification device which is accessed so as to communicate with both the device to be authorized and the authorization device, the verification method including:
   transmitting an authorization verification request to the verification device when the device to be authorized receives a service request from a user,
   acquiring authorization information from the device to be authorized when the verification device receives the request,
   allowing the verification device to transmit the acquired authorization information to the authorization device and request verification regarding whether the transmitted authorization information is authorization information that has been authorized by an authorization device of a transmission destination,
   allowing the authorization device to perform verification in accordance with the request from the verification device and transmit the verification result to the verification device, and
   allowing the verification device to receive the verification result from the authorization device and present the received verification result to the user.
(Appendix 20) A verification method which is performed by a system which includes a verification device which is accessed so as to communicate with a user terminal that is an object receiving authorization, a device to be authorized that provides a service, and an authorization device that performs the authorization, the verification method including:
   transmitting an authorization verification request to the verification device when the device to be authorized receives a service request from a user;
   allowing the device to be authorized to receive the authorization verification request from the device to be authorized that has received the authorization verification request from a user;
   acquiring authorization information from the device to be authorized when the verification device receives the request;
   allowing the verification device to transmit the acquired authorization information to the authorization device and request verification regarding whether the transmitted authorization information is authorization information that has been authorized by an authorization device of a transmission destination;
   allowing the authorization device to perform verification in accordance with the request from the verification device and transmit the verification result to the verification device; and
   allowing the verification device to receive the verification result from the authorization device and present the received verification result to the service provider to be authorized.

## Claims

1. A verification system including
a device (200) to be authorized configured to receive authorization,
an authorization device (400) configured to perform the authorization, and a verification device (300) configured to communicate with both the device (200) to be authorized and the authorization device (400), and
a user terminal (100),
wherein:
the device (200) to be authorized comprises a transmitting unit (220) configured to transmit an authorization verification request to the verification device (300) when the device (200) to be authorized receives a service request from the user terminal (100), the service request from the user terminal (100) not including information used to authenticate the user;
the verification device (300) comprises a receiving unit (320) configured to receive the authorization verification request from the device (200) to be authorized, an authorization information acquiring unit (310) configured to acquire authorization information from the device (200) to be authorized when the verification device (300) receives the authorization verification request, and a verification request unit (350) configured to transmit the acquired authorization information to the authorization device (400) and request verification regarding whether the transmitted authorization information is authorization information that has been authorized by the authorization device (400);
the authorization device (400) comprises a controller (430) that allows the authorization device to perform verification in accordance with the request from the verification device (300) and transmit the verification result to the verification device (300);
the verification device (300) further comprises a transceiving unit (320) configured to receive the verification result from the authorization device (400) and present the received verification result to the user terminal (100);
the verification device (300) further comprises:
a user database (360), and
an authentication unit (370) configured, to inquire the user whether to cooperate with the device to be authorized while presenting the verification result of the authorization information to the user through the user terminal, when the cooperation with the device to be authorized is allowed by the user of the user terminal and information used to authenticate the user are received from the user terminal (100), to authenticate the user by comparing the received information and information used to authenticate the user stored in the user database (360);
the verification device (300) is configured, when the authentication normally proceeds, to transmit an authentication assertion to the device (200) to be authorized; and
the device (200) to be authorized is configured, when receiving the authentication assertion, to start the service while presenting to the user terminal (10) that authentication is completed.

2. The verification system according to claim 1, which is connected with a plurality of authorization devices (400),
wherein the verification request unit (350) is configured to select an authorization device (400) corresponding to the acquired authorization information among the plurality of authorization devices (400) and request the verification to the selected authorization device (400).

3. The verification system according to claim 1 or 2,
wherein the authorization information acquiring unit (310) of the verification device (300) is configured to perform filtering on the authorization verification request from the device (200) to be authorized, and the processing is continuously performed only for the authorization verification request according to a predetermined standard.

4. A verification method performed by a system comprising a device (200) to be authorized configured to receive authorization, an authorization device configured to perform the authorization, and a verification device (300) configured to communicate with both the device (200) to be authorized and the authorization device 400), and a user terminal (100), the verification method comprising:
the device (200) to be authorized transmitting an authorization verification request to the verification device (300) when the device (200) to be authorized receives a service request from the user terminal (100), the service request from the user terminal (100) not including information used to authenticate the user;
the verification device (300) acquiring authorization information from the device (200) to be authorized when the verification device (300) receives the authorization verification request;
the verification device (300) transmitting the acquired authorization information to the authorization device (400) and requesting verification regarding whether the transmitted authorization information is authorization information that has been authorized by the authorization device (400);
the authorization device (400) performing verification in accordance with the request from the verification device (300) and transmitting the verification result to the verification device (300);
the verification device (300) receiving the verification result from the authorization device (400) and presenting the received verification result to the user terminal (100);
the verification device (300) authenticating the user, after inquiring the user whether to cooperate with the device to be authorized while presenting the verification result of the authorization information to the user through the user terminal and after the cooperation with the device to be authorized is allowed by the user of the user terminal, by comparing the received information and information used to authenticate the user stored in a user database (360) of the verification device (300);
the verification device (300) transmitting, when the authentication normally proceeds, an authentication assertion to the device (200) to be authorized; and
the device (200) to be authorized starting, when receiving the authenticatin assertion the service while presenting to the user terminal (10) that authentication is completed.

## Patentansprüche

1. Ein Verifizierungssystem umfassend:
eine zu autorisierende Vorrichtung (200), die konfiguriert ist, um eine Autorisierung zu erhalten,
eine Autorisierungsvorrichtung (400), die konfiguriert ist, um die Autorisierung auszuführen, und
eine Verifizierungsvorrichtung (300), die konfiguriert ist, um sowohl mit der zu autorisierenden Vorrichtung (200) als auch mit der Autorisierungsvorrichtung (400) zu kommunizieren, und
ein Benutzerendgerät (100),
wobei:
die zu autorisierende Vorrichtung (200) eine Sendeeinheit (220) umfasst, die konfiguriert ist, um eine Autorisierungsverifizierungsanforderung an die Verifizierungsvorrichtung (300) zu senden, wenn die zu autorisierende Vorrichtung (200) eine Serviceanforderung von dem Benutzerendgerät (100) empfängt, wobei die Serviceanforderung von dem Benutzerendgerät (100) keine Informationen beinhaltet, die zur Authentifizierung des Benutzers verwendet werden;
die Verifizierungsvorrichtung (300) eine Empfangseinheit (320) umfasst, die konfiguriert ist, um die Autorisierungsverifizierungsanforderung von der zu autorisierenden Vorrichtung (200) zu empfangen, eine Autorisierungsinformationserfassungseinheit (310), die konfiguriert ist, um Autorisierungsinformationen von der zu autorisierenden Vorrichtung (200) zu erfassen, wenn die Verifizierungsvorrichtung (300) die Autorisierungsverifizierungsanforderung empfängt, und eine Verifizierungsanforderungseinheit (350), die konfiguriert ist, um die erfassten Autorisierungsinformationen an die Autorisierungsvorrichtung (400) zu übertragen und eine Anforderungsprüfung durchzuführen, ob die übertragenen Autorisierungsinformationen Autorisierungsinformationen sind, die von der Autorisierungsvorrichtung (400) autorisiert wurden;
die Berechtigungsvorrichtung (400) eine Steuerung (430) umfasst, die es der Berechtigungsvorrichtung ermöglicht, eine Verifizierung gemäß der Anforderung der Verifikationsvorrichtung (300) durchzuführen und das Verifikationsergebnis an die Verifikationsvorrichtung (300) zu übertragen;
die Verifikationsvorrichtung (300) ferner eine Sende-Empfangseinheit (320) umfasst, die konfiguriert ist, um das Verifikationsergebnis von der Autorisierungsvorrichtung (400) zu empfangen und das empfangene Verifikationsergebnis dem Benutzerendgerät (100) zu präsentieren;
die Verifizierungsvorrichtung (300) ferner umfasst:
eine Benutzerdatenbank (360) und
eine Authentifizierungseinheit (370), die konfiguriert ist, um den Benutzer zu fragen, ob er mit der zu autorisierenden Vorrichtung zusammenarbeiten möchte, während sie dem Benutzer über das Benutzerendgerät das Verifizierungsergebnis der Autorisierungsinformationen präsentiert, wenn die Zusammenarbeit mit der zu autorisierenden Vorrichtung vom Benutzer des Benutzerendgerätes erlaubt wird und Informationen, die zur Authentifizierung des Benutzers verwendet werden, von dem Benutzerendgerät (100) empfangen werden, um den Benutzer durch Vergleichen der empfangenen Informationen und Informationen, die zur Authentifizierung des in der Benutzerdatenbank (360) gespeicherten Benutzers verwendet werden, zu authentifizieren;
die Verifizierungsvorrichtung (300) konfiguriert ist, um, wenn die Authentifizierung normal voranschreitet, eine Authentifizierungsbestätigung an die zu autorisierende Vorrichtung (200) zu übertragen; und
die zu autorisierende Vorrichtung (200) konfiguriert ist, um beim Empfangen der Authentifizierungsbestätigung den Dienst zu starten, während sie dem Benutzerendgerät (10) präsentiert, dass die Authentifizierung abgeschlossen ist.

2. Verifikationssystem nach Anspruch 1, das mit einer Vielzahl von Autorisierungsvorrichtungen (400) verbunden ist,
wobei die Verifizierungsanforderungseinheit (350) konfiguriert ist, um eine Autorisierungsvorrichtung (400) auszuwählen, die den erfassten Autorisierungsinformationen aus der Vielzahl von Autorisierungsvorrichtungen (400) entspricht, und die Verifizierung an die ausgewählte Autorisierungsvorrichtung (400) anzufordern.

3. Das Verifikationssystem nach Anspruch 1 oder 2,
wobei die Autorisierungsinformationserfassungseinheit (310) der Verifizierungsvorrichtung (300) konfiguriert ist, um eine Filterung der Autorisierungsverifizierungsanforderung von der zu autorisierenden Vorrichtung (200) durchzuführen, und die Verarbeitung kontinuierlich nur für die Autorisierungsverifizierungsanforderung gemäß einem vorbestimmten Standard durchgeführt wird.

4. Verifikationsverfahren, das von einem System durchgeführt wird, das eine zu autorisierende Vorrichtung (200), die konfiguriert ist, um eine Autorisierung zu erhalten, eine Autorisierungsvorrichtung, die konfiguriert ist, um die Autorisierung auszuführen, und eine Verifikationsvorrichtung, die konfiguriert ist, um sowohl mit der zu autorisierenden Vorrichtung (200) als auch mit der Autorisierungsvorrichtung 400) zu kommunizieren, und ein Benutzerterminal (100) umfasst, wobei das Verifikationsverfahren umfasst:
Senden einer Autorisierungsverifizierungsanforderung an die Verifizierungsvorrichtung (300) durch die zu autorisierende Vorrichtung (200), wenn die zu autorisierende Vorrichtung (200) eine Serviceanforderung von dem Benutzerendgerät (100) empfängt, wobei die Serviceanforderung von dem Benutzerendgerät (100) keine Informationen enthält, die zur Authentifizierung des Benutzers verwendet werden;
Erfassen, durch die Verifizierungsvorrichtung (300), der Autorisierungsinformationen von der zu autorisierenden Vorrichtung (200), wenn die Verifizierungsvorrichtung (300) die Autorisierungsverifizierungsanforderung empfängt; Übertragen, durch die Verifizierungsvorrichtung (300), der erfassten Autorisierungsinformationen an die Autorisierungsvorrichtung (400) und Anforderung einer Überprüfung, ob die übertragenen Autorisierungsinformationen Autorisierungsinformationen sind, die von der Autorisierungsvorrichtung (400) autorisiert wurden;
Durchführung einer Verifikation durch die Autorisierungsvorrichtung (400) gemäß der Anforderung der Verifikationsvorrichtung (300) und Übertragen des Verifikationsergebnisses an die Verifikationsvorrichtung (300);
die Verifikationsvorrichtung (300) empfängt das Verifikationsergebnis von der Autorisierungsvorrichtung (400) und präsentiert das empfangene Verifikationsergebnis dem Benutzerendgerät (100);
die Verifizierungsvorrichtung (300) authentifiziert den Benutzer, nachdem sie den Benutzer gefragt hat, ob er mit der zu autorisierenden Vorrichtung zusammenarbeiten möchte, während sie dem Benutzer das Verifizierungsergebnis der Autorisierungsinformationen über das Benutzerendgerät präsentiert, und nachdem die Zusammenarbeit mit der zu autorisierenden Vorrichtung durch den Benutzer des Benutzerendgerätes, durch Vergleichen der empfangenen Informationen und Informationen, die zur Authentifizierung des Benutzers in einer Benutzerdatenbank (360) der Verifizierungsvorrichtung (300) gespeichert sind, erlaubt wird;
die Verifizierungsvorrichtung (300) sendet, wenn die Authentifizierung normal abläuft, eine Authentifizierungsbestätigung an die zu autorisierende Vorrichtung (200); und
die zu autorisierende Vorrichtung (200) startet beim Empfangen der Authentifizierungsbestätigung den Dienst, während sie dem Benutzerendgerät (10) präsentiert, dass die Authentifizierung abgeschlossen ist.

## Revendications

1. Système de vérification incluant
un dispositif (200) à autoriser configuré pour recevoir une autorisation,
un dispositif d'autorisation (400) configuré pour effectuer l'autorisation, et un dispositif de vérification (300) configuré pour communiquer à la fois avec le dispositif (200) à autoriser et le dispositif d'autorisation (400), et
un terminal d'utilisateur (100),
dans lequel :
le dispositif (200) à autoriser comprend une unité de transmission (220) configurée pour transmettre une demande de vérification d'autorisation au dispositif de vérification (300) lorsque le dispositif (200) à autoriser reçoit une demande de service en provenance du terminal d'utilisateur (100), la demande de service en provenance du terminal d'utilisateur (100) n'incluant pas d'informations utilisées pour authentifier l'utilisateur ;
le dispositif de vérification (300) comprend une unité de réception (320) configurée pour recevoir la demande de vérification d'autorisation en provenance du dispositif (200) à autoriser, une unité d'acquisition d'informations d'autorisation (310) configurée pour acquérir des informations d'autorisation à partir du dispositif (200) à autoriser lorsque le dispositif de vérification (300) reçoit la demande de vérification d'autorisation, et une unité de demande de vérification (350) configurée pour transmettre les informations d'autorisation acquises au dispositif d'autorisation (400) et demander une vérification concernant si les informations d'autorisation transmises sont des informations d'autorisation qui ont été autorisées par le dispositif d'autorisation (400) ;
le dispositif d'autorisation (400) comprend un contrôleur (430) qui permet au dispositif d'autorisation d'effectuer une vérification conformément à la demande en provenance du dispositif de vérification (300) et de transmettre le résultat de vérification au dispositif de vérification (300) ;
le dispositif de vérification (300) comprend en outre une unité d'émission-réception (320) configurée pour recevoir le résultat de vérification en provenance du dispositif d'autorisation (400) et présenter le résultat de vérification reçu au terminal d'utilisateur (100) ;
le dispositif de vérification (300) comprend en outre :
une base de données d'utilisateur (360), et
une unité d'authentification (370) configurée pour interroger l'utilisateur quant à si coopérer avec le dispositif à autoriser tout en présentant le résultat de vérification des informations d'autorisation à l'utilisateur par l'intermédiaire du terminal d'utilisateur, lorsque la coopération avec le dispositif à autoriser est permise par l'utilisateur du terminal d'utilisateur et que des informations utilisées pour authentifier l'utilisateur sont reçues en provenance du terminal d'utilisateur (100), pour authentifier l'utilisateur en comparant les informations reçues et des informations utilisées pour authentifier l'utilisateur stockées dans la base de données d'utilisateur (360) ;
le dispositif de vérification (300) est configuré, lorsque l'authentification se poursuit normalement, pour transmettre une assertion d'authentification au dispositif (200) à autoriser ; et
le dispositif (200) à autoriser est configuré, lors de la réception de l'assertion d'authentification, pour démarrer le service tout en présentant au terminal d'utilisateur (10) le fait que l'authentification est terminée.

2. Système de vérification selon la revendication 1, qui est connecté avec une pluralité de dispositifs d'autorisation (400),
dans lequel l'unité de demande de vérification (350) est configurée pour sélectionner un dispositif d'autorisation (400) correspondant aux informations d'autorisation acquises parmi la pluralité de dispositifs d'autorisation (400) et demander la vérification au dispositif d'autorisation sélectionné (400).

3. Système de vérification selon la revendication 1 ou 2,
dans lequel l'unité d'acquisition d'informations d'autorisation (310) du dispositif de vérification (300) est configurée pour effectuer un filtrage sur la demande de vérification d'autorisation en provenance du dispositif (200) à autoriser, et le traitement est effectué en continu uniquement pour la demande de vérification d'autorisation selon une norme prédéterminée.

4. Procédé de vérification effectué par un système comprenant un dispositif (200) à autoriser configuré pour recevoir une autorisation, un dispositif d'autorisation configuré pour effectuer l'autorisation, et un dispositif de vérification (300) configuré pour communiquer à la fois avec le dispositif (200) à autoriser et le dispositif d'autorisation (400), et un terminal d'utilisateur (100), le procédé de vérification comprenant :
le dispositif (200) à autoriser transmettant une demande de vérification d'autorisation au dispositif de vérification (300) lorsque le dispositif (200) à autoriser reçoit une demande de service en provenance du terminal d'utilisateur (100), la demande de service en provenance du terminal d'utilisateur (100) n'incluant pas d'informations utilisées pour authentifier l'utilisateur ;
le dispositif de vérification (300) acquérant des informations d'autorisation à partir du dispositif (200) à autoriser lorsque le dispositif de vérification (300) reçoit la demande de vérification d'autorisation ;
le dispositif de vérification (300) transmettant les informations d'autorisation acquises au dispositif d'autorisation (400) et demandant une vérification concernant si les informations d'autorisation transmises sont des informations d'autorisation qui ont été autorisées par le dispositif d'autorisation (400) ;
le dispositif d'autorisation (400) effectuant une vérification conformément à la demande en provenance du dispositif de vérification (300) et transmettant le résultat de vérification au dispositif de vérification (300) ;
le dispositif de vérification (300) recevant le résultat de vérification en provenance du dispositif d'autorisation (400) et présentant le résultat de vérification reçu au terminal d'utilisateur (100) ;
le dispositif de vérification (300) authentifiant l'utilisateur, après l'interrogation de l'utilisateur quant à si coopérer avec le dispositif à autoriser tout en présentant le résultat de vérification des informations d'autorisation à l'utilisateur par l'intermédiaire du terminal d'utilisateur et après que la coopération avec le dispositif à autoriser est permise par l'utilisateur du terminal d'utilisateur, en comparant les informations reçues et des informations utilisées pour authentifier l'utilisateur stockées dans une base de données d'utilisateur (360) du dispositif de vérification (300) ;
le dispositif de vérification (300) transmettant, lorsque l'authentification se poursuit normalement, une assertion d'authentification au dispositif (200) à autoriser ; et
le dispositif (200) à autoriser démarrant, lors de la réception de l'assertion d'authentification, le service tout en présentant au terminal d'utilisateur (10) le fait que l'authentification est terminée.
